(19) Europäisches Patentamt
European Patent Office
Office européen des brevets

(11) Publication number: **0 095 305**
**B1**

(12) **EUROPEAN PATENT SPECIFICATION**

(45) Date of publication of patent specification: **19.02.86**

(51) Int. Cl.$^4$: **C 01 B 33/28**

(21) Application number: **83302777.4**

(22) Date of filing: **17.05.83**

(54) **Method for preparing acid stable zeolites and high silica zeolites prepared by it.**

(30) Priority: **18.05.82 US 379424**

(43) Date of publication of application:
**30.11.83 Bulletin 83/48**

(45) Publication of the grant of the patent:
**19.02.86 Bulletin 86/08**

(84) Designated Contracting States:
**AT BE DE FR GB IT NL SE**

(56) References cited:
**DE-A-1 567 475**
**DE-A-2 617 571**
**US-A-3 293 192**
**US-A-3 591 488**
**US-A-3 691 099**
**US-A-3 972 983**
**US-A-4 218 307**
**US-A-4 305 845**

(73) Proprietor: **MOBIL OIL CORPORATION**
**150 East 42nd Street**
**New York New York 10017 (US)**

(72) Inventor: **Lapierre, Rene Bernard**
**43 Arrowhead Court**
**Medford New Jersey 08055 (US)**
Inventor: **Partridge, Randall David**
**30 Battle Road**
**Princeton New Jersey 08540 (US)**
Inventor: **Reischman, Paul Thomas**
**161 Franklin Corner Road**
**Lawrenceville New Jersey 08648 (US)**

(74) Representative: **West, Alan Harry**
**Mobil Court 3 Clements Inn**
**London WC2A 2EB (GB)**

**EP 0 095 305 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for preparing acid stable zeolites, especially zeolites of the faujasite family.

Zeolites are known materials which have been found to be extremely useful in petroleum refining operations. Of the known types of zeolite, the large pore zeolites typified by the faujasitic zeolites have been used extensively for processes such as cracking, hydrocracking, isomerization and alkylation, for example, as described in U.S. Patents 4,137,152, 3,804,747. It has been found, however, that although many of these zeolites possess satisfactory activity for these and other reactions, they may be lacking in stability. Zeolite Y which has been used widely for cracking processes is particularly notable in this respect as it has good cracking activity but relatively poor stability and attempts have been made to improve its stability. One form of zeolite Y which is of interest in this respect is the form referred to as "Ultrastable Y" which is described in U.S. Patents 3,293,192 and 3,402,996 and which is produced by successively base exchanging a Y type zeolite with ammonium ions and then calcining the zeolite, after which the process of base exchange and calcination is repeated. The sequence of ion exchange and heat treatment results in a shrinkage of the unit cell and this is believed to lead to the high stability of this form of the zeolite. Another process for preparing stabilized forms of type Y zeolites is described in U.S. Patent 4,218,307 and which relies upon the dealuminization of a rare earth-exchanged zeolite Y with mineral acid.

It has been observed that the stability of zeolites may be related to their silica:alumina ratio, with the higher ratios leading to greater stability to heat, steam and acid. In view of this, various methods have been proposed for increasing the stability of zeolites by dealuminization — the removal of structural alumina. U.S. Patent 3,591,488 discloses a method for dealuminizing faujasitic zeolites by steaming. U.S. Patent 3,367,884 discloses a process which, like that of U.S. Patent 4,218,307, utilizes an initial prestabilization step prior to contacting the zeolite with acid to remove structural aluminum. Netherlands Patent 6,704,534 also employs an initial prestabilization by steaming.

The reason why these prestabilization steps are employed is that zeolites which initially have a relatively low silica:alumina ratio are unstable to acid: contact with strong mineral acids tends to bring about a collapse of the crystal structure. Although steps may be taken to avoid this collapse, for example, as described in U.S. Patent 3,691,099 by adding additional exchangeable cations to the acid, the problem remains that low silica zeolites are relatively unstable to acid and it would be desirable to find some easy way to stabilize them so that a simple acid extraction technique could be used to remove the aluminum and so produce a zeolite having a relatively higher silica:alumina ratio and better thermal stability.

During previous years, proposals have been made for preparing ultrastable zeolite Y by calcination in a deep bed or in the presence of steam, for example, as described in U.S. Patent 3,293,192, where $NH_4$—Y is calcined at high temperatures (700°C—825°C) for several hours with a high partial pressure of steam. Another method which is said to result in the formation of ultrastable zeolite Y employs calcination of the ammonium form of the zeolite using a slow heating rate between 500°C and 600°C: Angew. Chem. Int. Ed. Engl. *19*, 743 (1980). These ultrastable zeolites are not, however, stable during extraction with strong mineral acids and therefore, the problem of producing an acid stable form of the zeolite remains.

DE—A—1 567 475 describes a procedure by means of which the structural stability of a crystalline aluminosilicate zeolite can be increased, by calcining in the presence of an inert gas or air containing added moisture. However, that document makes no reference to either acid stability or to the use of any specific heating rate.

A method which did result in the production of an acid stable zeolite Y is described in the article by Scherzer, J. Catal. *54*, 285 (1978). The method, which relied upon the self-steaming of the zeolite in a closed container had the major disadvantage that it could not be used on a larger scale for the commercial production of zeolites because the self-steaming conditions could not be controlled in a larger scale operation.

It has now been found that faujasitic zeolites, especially zeolite Y, may be made stable to acid by a simple steaming process. The process may be used with zeolites of the faujasite family which have silica:alumina ratios from 3 to 25, for example, zeolite Y and zeolite ZSM-20. The process comprises calcining the zeolite under conditions which control the rate at which the chemically bound water is eliminated: in most of the zeolites used, the chemically bound water tends to come off at temperatures above 400°C and accordingly, the calcination conditions are controlled at these temperatures. Elimination of the chemically bound water is controlled by calcining the zeolite in a steam-containing atmosphere with a controlled rate of heating in the temperature range in which the water is removed, generally from 500 to 650°C. In this range, the heating rate is maintained at a value below 1.5°C $min^{-1}$. Once this temperature range has been passed, heating may take place at a faster rate, as desired.

According to the invention, there is provided a process for making an acid stabilized zeolite of the faujasite type, which comprises calcining a zeolite of the faujasite type in a steam-containing atmosphere at increasing temperatures extending over the temperature range at which the chemically bound water is liberated from the zeolite, characterized by a heating rate not greater than 1.5°C $min^{-1}$.

The product of the stabilization treatment is a zeolite which is stable to acid and which may, therefore, be subjected to an acid dealuminization. The dealuminized zeolites produced by the acid extraction have higher silica:alumina ratios than the starting materials; structural silica:alumina ratios of over 100:1 are

readily attainable. The highly siliceous forms of zeolite ZSM-20 having structural silica:alumina ratios greater than 10:1 are hitherto unknown materials.

The zeolites which may be treated by the process of the invention are members of the faujasite family which have initial silica:alumina ratios from 3:1 to 25:1 (the silica:alumina ratios mentioned herein are the framework or structural ratios unless the contrary is stated). The faujasite zeolites are large pore zeolites which are characterized by a double 6-ring as the secondary building unit in their structural frameworks. The unit cells of these zeolites are cubic with a large cell dimension of almost 25 Angstroms and contain 192 (Si, Al)$O_4$ tetrahedra. The aluminosilicate framework consists of a diamond-like array of linked octrahedra which are joined tetrahedrally through the 6-rings with the linkage between adjoining truncated octahedra being a double 6 ring or hexagonal prism containing 12 (Si, Al)$O_4$ tetrahedra. The large pore openings which characterize these zeolites are formed by 12 tetrahedral units and have a dimension of about 7.4 Angstroms (based on an X-ray structure determination using an oxygen radius of 1.35 A).

The zeolite is also selected to have a silica:alumina ratio from 3:1 to 25:1. Conventionally, the silica:alumina ratio of a zeolite is determined by the thermogravimetric analysis (TGA) ammonia desorption technique and this technique may suitably be applied to determine the silica:alumina ratio of the zeolites used in the process of the invention. It should, however, be understood that if a subsequent dealuminization step is carried out on the stabilized zeolite, the silica:alumina ratio determined by this method may not accurately represent the silica:alumina ratio of the framework because the aluminum removed may become exchanged onto the framework aluminum and so will prevent ammonium ions becoming associated with the framework aluminum during the determination, leading to a low and misleading ammonia titration. For similar reasons, a chemical analysis may give a misleading high result for the framework silica:alumina ratio because it will include the trapped aluminum in addition to framework aluminum. Other properties of the framework aluminum may therefore be measured, such as the hexane/water sorption characteristics, indicative of the hydrophobicity of the zeolite.

Zeolites of the faujasite type exhibiting ratios within the specified range of 3:1 to 25:1 include zeolite Y and zeolite ZSM-20. Zeolite Y is a well-known and characterized synthetic zeolite which typically possesses a framework silica:alumina ratio from 3:1 to 6:1, although this ratio may go as high as 25:1. Zeolite ZSM-20 is a synthetic zeolite which has a formula, in the as-synthesized form of

$$(0.3\text{—}0.6)R_2O:(0.4\text{—}0.7)M_2O:Al_2O_3:(7\text{—}10)SiO_2$$

where R is a tetraethylammonium cation and M is an alkali metal cation, especially sodium. In the exchanged form, the formula would be:

$$(0\text{—}1.0)R_2O:(1.0\text{—}0)M_2O:Al_2O_3:(7\text{—}10)SiO_2$$

where R and M are as before. ZSM-20, together with details of its preparation and utility, is described in U.S. Patent 3,972,983.

The process of the invention is particularly useful with zeolite Y because of the great utility of this zeolite in petroleum refining operations; the ability to prepare forms of this zeolite with higher silica:alumina ratios by a simple stabilization — acid extraction technique is expected to enhance this already notable degree of utility.

The zeolite is calcined in the presence of steam, using a controlled rate of heating in the temperature range at which the chemically bound water is released. The amount of steam in the calcination atmosphere should be at least 1 percent by weight, preferably 10 to 20 percent by weight, although atmospheres consisting solely of steam may be used if desired. If a mixed atmosphere is used for the calcination, the other gas may comprise air but is preferably an inert gas such as nitrogen or helium. The desired atmosphere for the calcination step may be conveniently provided by saturating air or, better, nitrogen with steam at room temperature and then passing the steam-saturated gas to the calcination. During the calcination, the chemically bound water is liberated from the zeolite, with the liberation generally beginning at temperatures above 400°C. It is at these temperatures that the heating rate must be controlled in order to stabilize the zeolite. It has been found that a heating rate of not more than 1.5°C $min^{-1}$ should be observed and preferably not to exceed 1.0°C. Lower rates, for example, 0.5°C $min^{-1}$ may, of course, be used if desired. Heating rates of this magnitude should be particularly observed in the temperature range of 500 to 600°C, and generally, it is advantageous to maintain the heating rate within these limits at temperatures from 500 to 650°C. At temperatures above 650°C, higher heating rates may generally be used since it has been found that the use of slow rates at these higher temperatures produces no additional benefit in maintaining the crystallinity of the zeolite. However, if the zeolite is present in large quantities, it may be desirable to maintain the slow rate of heating to higher temperatures, for example 700°C or 750°C in order to obtain satisfactory stabilization. During the initial part of the calcination, at temperatures below those at which the chemically bound water is driven off, higher heating rates, for example up to 10°C $min^{-1}$ may be employed.

Because the nature of the zeolite determines its ability to withstand the steaming while still retaining its crystallinity, the steaming conditions should be correlated with the zeolite. For example, the zeolites with higher initial silica:alumina ratios can withstand relatively more severe steaming than those with lower

initial ratios and therefore zeolite ZSM-20 will generally be able to withstand a higher water partial pressure in the calcination atmosphere than zeolite Y which usually — but not always — has a lower silica:alumina ratio than ZSM-20. With zeolite Y it will normally not be possible to employ atmospheres consisting completely of steam during the calcination if the crystal structure of the zeolite is to be retained.

The calcination may be completed by heating the zeolite to the final desired temperature, typically 800°C or even higher, for example 850°C or 900°C. At these higher temperatures, conventional calcination procedures may be employed, using atmospheres of steam, steam mixed with air or an inert gas. Inert gases such as nitrogen and helium are preferred, either by themselves or mixed with steam. Generally, convenience will dictate that the calcination will be completed using the same atmosphere throughout the process.

Because a limited degree of shrinkage in the unit cell takes place during the calcination, the zeolite should be in a form which permits the structural collapse to take place. For this purpose, the zeolite should be at least partly in the ammonium, hydrogen or rare earth cationic form, although other cationic forms which also would permit the cell shrinkage are permissible, for example certain alkaline earth forms or non-oxygenated organic forms such as tetraethylammonium or tetrapropylammonium. Of these, the ammonium-exchanged form is preferred since it will become converted into the hydrogen form during the calcination, the hydrogen form readily allowing the shrinkage to occur. However, rare earth exchanged zeolites, such as the lanthanum, cerium, neodymium and samarium exchanged forms, may also be used and of these, the lanthanum and cerium exchanged forms are preferred. The base exchange may be carried out by conventional methods to the degree desired. Successive exchanges may be necessary in order to obtain sufficient exchange into the desired form, especially when making the ammonium-exchanged form. Normally, the zeolite should have at least one half of the exchangeable sites occupied by the cations which will permit the necessary cell shrinkage. Preferably, the content of bulky cations such as lithium should be reduced below 1 percent by appropriate base exchange. If the zeolite in its as-synthesized form has an appropriate cation content for treatment in the process it may, of course, be used in that form without preliminary base exchange.

After the calcination process is complete, the stabilized zeolite may be subjected to an acid extraction in order to obtain a higher silica:alumina ratio for the zeolite. It has been found that the zeolites retain a high degree of crystallinity during the calcination and that a good proportion of the retained crystallinity will persist during the acid extraction. The extraction is suitably carried out with mineral acids or strong organic acids such as citric acid, trimethylacetic acid and acetic acid but the preferred acid is hydrochloric acid and it may be suitably used in concentrations of 0.1 to 2 N, preferably about 0.5 to 1 N as crystallinity is retained better with the more dilute acid. Extraction temperatures are usually in the range 20 to 100°C and the extraction is most conveniently carried out by refluxing the stabilized zeolite with the acid. If desired, a complexing agent such as EDTA may be added in order to sequester the aluminum ions as they are removed from the zeolite structure. As an alternative, an additional cation which is exchangeable onto the zeolite may also be provided in the leaching solution, as described in U.S. Patent 3,691,097, to which reference is made for details of this leaching technique, but this expedient will generally not be necessary because the zeolite has sufficient stability to the acid even in the absence of the additional cations.

If desired, the calcination-extraction steps may be repeated in order to obtain a zeolite product which is even higher in silica. Because, as mentioned above, the chemically bound water comes off at higher temperatures with zeolites of a given type with relatively higher silica:alumina ratios, it may be desirable to use the controlled heating rates over a more extended temperature range during the second calcination, although this range may still lie within the 500 to 650°C range which is normally characteristic of the first step. Because the zeolites with the higher silica:alumina ratios also are more stable towards steaming treatments, the severity of the steam calcination may be increased during the second calcination, for example higher water partial pressures or even heating rates within the critical temperature range may be used. For example, atmospheres containing up to 100 percent steam may be preferred and heating rates may be as high as 1°C $min^{-1}$ or even 10°C $min^{-1}$ over the critical temperature range which, in this step, may be from 500 to 700°C or even higher, for example 750°C. However, heating rates of 5°C $min^{-1}$ will normally not be exceeded.

The product of the calcination-extraction procedure is a zeolite of the faujasite type having a higher silica:alumina ratio than the starting zeolite. Generally, the silica:alumina ratio of the product zeolites will be at least 30:1 and ratios above 50:1 or, in favorable cases, above 100:1, for example above 300:1 or even above 500:1, may be attained. At the same time, the dealuminized zeolite will retain a significant proportion of its original crystallinity, for example above 30 percent or even above 40 or 50 percent. Products of this kind have not, so far, been available by a convenient and economic procedure of the kind provided by this process and, especially in the case of zeolite Y, represent products of especial value and interest. The structure of the zeolite will be preserved throughout the process and therefore the final zeolite will have an X-ray diffraction pattern similar to that of the original zeolite although minor changes will be apparent, caused by the changes in unit cell dimension; other properties of the original zeolite will also be retained and therefore the product may find utility in the same applications as the original zeolite, for example cracking, hydrocracking, isomerization and alkylation.

Highly siliceous forms of zeolite ZSM-20 having silica:alumina ratios greater than 10:1 and usually greater than 20:1 have not hitherto been obtainable. They have, nevertheless, the characteristic

three-dimensional crystalline structure of ZSM-20 and are therefore true forms of this zeolite. The structure of ZSM-20 is a hexagonal faujasite structure with pores between 6 and 8 A° in diameter. This structure is manifested by the X-ray diffraction data which are the characteristic indicia of zeolite structure. According to U.S. Patent 3,972,983, the significant lines in the X-ray diffraction pattern are as follows:

TABLE 1
Significant X-ray data ZSM-20

| D(A°) | Relative intensity |
|---|---|
| 14.90±0.3 | VS |
| 14.21±0.3 | VS |
| 8.67±0.02 | M |
| 7.44±0.15 | M |
| 5.66±0.10 | S |
| 4.33±0.09 | M |
| 3.76±0.08 | M |
| 3.66±0.07 | S |
| 3.29±0.07 | M |
| 2.90±0.06 | M |
| 2.84±0.06 | M |
| 2.61±0.05 | M |

These data represent the lines of medium or stronger intensity as reported in U.S. Patent 3,972,983. The dealuminized, high silica forms of ZSM-20 exhibit the same characteristic lines although minor shifts in intensity and interplanar spacing may occur with the cationic form of the zeolite, its particular silica:alumina ratio and its previous thermal treatment.

The composition of the dealuminized high-silica zeolite, expressed in terms of the oxide formula is as follows:

$$(0\text{—}1.0)R_2O:(1.0\text{—}0)M_2O:Al_2O_3:(>10)SiO_2$$

where

M is a metallic cation, for example $Na^+$, $K^+$, $Ca^+_{1/2}$, $Mg^+_{1/2}$, $La^+_{1/3}$;

R is $H^+$ or a nitrogenous cation, for example $NH_4^+$, $(CH_3)_4N^+$, $(C_2H_5)_4N^+$.

The silica:alumina ratio of the ZSM-20 may be varied, as described above, by the severity of the acid extraction. Silica:alumina ratios of 20:1, 30:1, 50:1 and 100:1 or even higher, for example 250:1, 300:1 and 500:1, may be readily attained, while still retaining a highly crystalline structure. The structural silica:alumina ratio may be varied to a lesser extent by steaming the zeolite either in an atmosphere of pure steam or in steam and another gas, for example air or, preferably, nitrogen, although this treatment will leave considerable non-structural aluminum in the zeolite.

The silica:alumina ratios referred to herein are the structural or framework ratios, that is the ratio for the $SiO_4$ to the $AlO_4$ tetrahedra which together constitute the structure of which the zeolite is composed. This ratio may vary from the silica:alumina ratio determined by various physical and chemical methods. For example, a gross chemical analysis may include aluminum which is present in the form of cations associated with the acidic sites on the zeolite, thereby giving a low silica:alumina ratio. Similarly, if the ratio is determined by thermogravimetric analysis (TGA) of ammonia desorption, a low ammonia titration may be obtained if cationic aluminum prevents exchange of the ammonium ions onto the acidic sites. These disparities are particularly troublesome when certain treatments such as the dealuminization methods described below which result in the presence of ionic aluminum free of the zeolite structure are employed. Due care should therefore be taken to ensure that the framework silica:alumina ratio is correctly determined.

The dealuminized zeolite may be treated and used in the same manner as the original zeolite. For example, it may be used in different cationic forms produced by base exchange techniques, as described in U.S. Patent 3,972,983 or composited with a matrix such as a clay or a porous material such as silica-alumina

as described in U.S. Patent 3,972,983. The zeolite may be used in reactions such as olefin polymerization, aromatization, cracking and hydrocracking as described in U.S. Patent 3,972,983.

The invention is illustrated by the following Examples:

Examples 1—13

Sample comprising 2 g of $NH_4$—Na—Y($SiO_2$:$Al_2O_3$ about 5:1; 0.52% Na) were heated in a steam/nitrogen atmosphere produced by bubbling nitrogen at 50 or 100 ml $min^{-1}$ through water at a temperature range from 80°C to 95°C. (In Examples 6 and 7 an atmosphere of 100 percent steam was produced by boiling water). The heating rates used at various temperatures are shown in Table 2 below.

The calcined product was analyzed for crystallinity after which it was subjected to acid extraction by contact with hydrochloric acid under the conditions shown in Table 2 below. The crystallinities and silica:alumina ratios of the extracted products were then determined by X-ray diffraction and TGA/$NH_3$ desorption. Crystallinity was determined with reference to a sample of ultrastable zeolite Y (USY) from Davidson, taken as 100 percent. Two samples of commercial USY were also subjected to acid extraction as a comparison. The results are shown in Table 2.

TABLE 2

| Example | Zeolite | Atmosphere | | Heating rate °C/min | | | Calcined product cryst. % | Acid extraction conditions | | | Extracted product | |
|---|---|---|---|---|---|---|---|---|---|---|---|---|
| | | $N_2$ ml/min | $H_2O$ temp. °C | 200—500°C | 500—650°C | 650—800°C | | HCl conc. N | Contact time hr. | Temp. °C | Cryst. % | $SiO_2/Al_2O_3$ |
| 1 | Y | 100 | 80—90 | 5.0 | 5.0 | 5.0 | 43 | 0.1 | 1.0 | 80—90 | 9 | 47 |
| 2 | Y | 100 | 80—90 | 5.0 | 0.5 | 0.5 | 54 | 0.1 | 1.0 | 80—90 | 26 | 49 |
| 3 | Y | 100 | 80—90 | 2.5 | 0.5 | 0.5 | 46 | 0.1 | — | 80—90 | 51 | 309 |
| 4 | Y | 100 | 92 | 2.5 | 0.25 | 2.5 | 63 | —<br>2.0 | —<br>1.0 | —<br>90 | 65<br>40 | 91<br>500 |
| 5 | Y | 50 | 95 | 2.5 | 0.20 | 2.5 | 76 | 2.0 | 3.0 | 90 | 38 | 500 |
| 6 | Y | 0 | 100 | 2.5 | 0.20 | 2.5 | 53 | 0 | 0 | 0 | 0 | — |
| 7 | Y | 0 | 100 | 2.5 | 0.20 | 2.5 | 63 | — | — | — | — | — |
| 8 | Y | 50 | 95 | 2.5 | 2.5 | 2.5 | 25 | — | — | — | — | — |
| 9 | Y | 50 | 95 | 2.5 | 0.20 | — | 63 | 0.1 | 1.0 | 95 | 67 | — |
| 10 | Y | 100 | 95 | 2.5 | 0.20 | — | 51 | 0.1 | 1.0 | 90 | 47 | 65 |
| 11 | Y | 100 | — | 2.5 | 0.20 | — | 0 | | | | | |
| 12 | Linde USY | | | | | | 85 | 0.1 | 1.0 | 85 | 22 | — |
| 13 | Davidson USY* | | | | | | 100* | 0.1 | 3.0 | 70 | 30 | — |

*Ultrastable Y (USY) zeolite used as crystallinity reference.

Example 1 employed a fast heating rate (5°C $min^{-1}$ in the 500°C—650°C temperature range). On acid extraction, the calcined product lost most of its crystallinity, as compared to the products of Examples 2 to 5, where low heating rates below 1.5°C $min^{-1}$ resulted in a product which could be successfully extracted, even by 2 N HCl, to produce a highly siliceous zeolite Y.

Examples 6 and 7 show that calcination atmospheres consisting entirely of steam do result in a loss of crystallinity in the calcined product, even with controlled heating rates in the critical range. The loss becomes more marked, however, if a fast heating rate is used, as shown in Example 8.

Comparison of Examples 5 and 8 shows that control of the heating rate in the range of 500°C to 650°C is essential for minimizing the loss of crystallinity during the calcination. Heating rates as low as 1.6°C $min^{-1}$ are excessive in the lower temperature range as shown by Example 3.

Example 14

A sample of zeolite ZSM-20 prepared by the method described in U.S. Patent 3,972,983 was ammonium exchanged with 1 M $NH_4NO_3$ solution for 1 hour at 80°C, followed by washing with water. The washed zeolite was calcined in steam (10 kPa steam/90 kPa air) with the temperature increasing at the rate of 0.5°C $min^{-1}$ from 30 to 200°C and at the rate of 2.5°C $min^{-1}$ from 200 to 550°C at which temperature it was maintained for 2 hours. The steamed zeolite was then ammonium exchanged with 1 M $NH_4NO_3$ solution for 1 hour at 80°C and washed with water. The analysis results for this zeolite are shown in Table 3 below:

TABLE 3

ZSM-20 Analysis

Analysis (calcined basis)

| | Wt.% | Wt.% normalized | Mole ratio on $Al_2O_3$ basis |
|---|---|---|---|
| N | 1.07 | 1.32 | — |
| Na | 0.04 | 0.05 | — |
| $Al_2O_3$ | 12.43 | 15.31 | 1.00 |
| $SiO_2$ | 65.31 | 80.42 | 8.91 |
| $N_2O$ | — | — | 0.63 |
| $Na_2O$ | — | — | 0.02 |
| Ash | 82.50 | 82.50 | — |

| TGA results | | (repeat) |
|---|---|---|
| $SiO_2/Al_2O_3$ — by $NH_4^+$ exch. | 43.6 | (42.4) |
| $SiO_2/Al_2O_3$ — by $NH_3$ ads. | 23.2 | (20.7) |
| $H_2O$ sorption gm/100 gm | 30.1 | |
| n-$C_6H_{14}$ sorption gm/100 gm | 21.1 | |

The X-ray diffraction data for this zeolite are shown in Table 4 below.

TABLE 4

| 2 (Theta) | D(A) | I/IMAX |
|---|---|---|
| 6.53 | 13.53 | 20 |
| 8.80 | 10.05 | 2 |
| 11.05 | 8.01 | 44 |
| 15.95 | 5.56 | 34 |
| 16.71 | 5.31 | 19 |
| 17.00 | 5.22 | 5 |
| 17.19 | 5.16 | 25 |
| 18.25 | 4.86 | 19 |
| 18.80 | 4.72 | 35 |
| 19.70 | 4.51 | 7 |
| 20.00 | 4.44 | 7 |
| 21.50 | 4.13 | 7 |
| 22.21 | 4.00 | 21 |
| 22.80 | 3.90 | 20 |
| 24.71 | 3.60 | 15 |
| 25.14 | 3.54 | 10 |
| 25.92 | 3.44 | 18 |
| 26.64 | 3.35 | 16 |
| 27.94 | 3.19 | 9 |
| 28.88 | 3.09 | 14 |
| 29.80 | 2.998 | 12 |
| 32.29 | 2.772 | 13 |
| 32.65 | 2.742 | 15 |
| 33.31 | 2.690 | 10 |
| 33.97 | 2.639 | 11 |
| 34.28 | 2.616 | 13 |
| 34.62 | 2.591 | 15 |
| 38.14 | 2.360 | 8 |
| 39.57 | 2.278 | 3 |
| 41.76 | 2.163 | 5 |
| 44.44 | 2.039 | 5 |

TABLE 4 (contd.)

| 2 (Theta) | D(A) | I/IMAX |
|---|---|---|
| 48.18 | 1.889 | 5 |
| 48.38 | 1.882 | 4 |
| 49.80 | 1.831 | 3 |
| 49.94 | 1.826 | 3 |
| 52.93 | 1.730 | 3 |
| 53.61 | 1.710 | 2 |
| 54.39 | 1.687 | 5 |
| 56.26 | 1.635 | 2 |
| 58.74 | 1.572 | 5 |
| 58.84 | 1.569 | 6 |

These X-ray data demonstrate that the dealuminized form of the zeolite still possesses the characteristic structure of zeolite ZSM-20: lines numbers 1, 2, 5, 7, 8, 17, 21, 22, 27, 31, 32 and 33 correspond to the significant lines of ZSM-20 as reported in Table 1 above and U.S. Patent 3,972,983.

The ammonium form zeolite (silica:alumina ratio about 42) prepared in this way was calcined in steam (10 kPa steam, 90 kPa air) using a heating rate of 2.5°C $min^{-1}$ from 30 to 550°C, 0.25°C $min^{-1}$ from 550 to 750°C after which the zeolite was allowed to cool to 30°C and then contacted with 0.1 N HCl for 1 hour at 80°C. The calcination and acid treatment steps were then repeated followed by treatment with 2.0 N HCl at 80°C for 1 hour. Finally, the extracted zeolite was ammonium exchanged with 1.0 M $NH_4NO_3$ at 20°C for 12 hours. The analysis results for this zeolite are shown in Table 5 below.

TABLE 5
Dealuminized ZSM-20 analysis

| Analysis (calcined basis) | Wt.% | Wt.% normalized | Mole ratio on $Al_2O_3$ basis |
|---|---|---|---|
| N | 0.03 | 0.03 | — |
| Na | 0.03 | 0.03 | — |
| $Al_2O_3$ | 0.32 | 0.37 | 1.00 |
| $SiO_2$ | 85.99 | 99.43 | 456.1 |
| $N_2O$ | — | — | 0.63 |
| $Na_2O$ | — | — | 0.40 |
| Ash | 90.66 | 90.66 | — |
| TGA results | | | |
| $SiO_2/Al_2O_3$ — by $NH_4^+$ exch. | | | 2176 |
| $SiO_2/Al_2O_3$ — by $NH_3$ ads. | | | 1085 |
| $H_2O$ sorption gm/100 gm | | | 4.6 |
| n-$C_6H_{14}$ sorption gm/100 gm | | | 21.1 |

The X-ray diffraction data for this form of the zeolite are shown in Table 6 below.

TABLE 6

| 2 Theta | D(A) | I/IMAX |
|---|---|---|
| 6.65 | 13.30 | 20 |
| 11.14 | 7.94 | 26 |
| 15.20 | 5.83 | 3 |
| 15.95 | 5.56 | 22 |
| 16.70 | 5.31 | 6 |
| 17.32 | 5.12 | 10 |
| 18.40 | 4.82 | 7 |
| 18.97 | 4.68 | 11 |
| 19.90 | 4.46 | 4 |
| 21.65 | 4.11 | 3 |
| 22.36 | 3.98 | 5 |
| 22.97 | 3.87 | 6 |
| 24.89 | 3.58 | 4 |
| 25.31 | 3.52 | 3 |
| 26.12 | 3.41 | 4 |
| 26.65 | 3.34 | 3 |
| 26.84 | 3.32 | 4 |
| 28.96 | 3.08 | 2 |
| 29.12 | 3.07 | 2 |
| 30.07 | 2.972 | 2 |
| 32.50 | 2.755 | 3 |
| 32.99 | 2.715 | 3 |
| 33.57 | 2.670 | 1 |
| 34.53 | 2.597 | 3 |
| 34.91 | 2.570 | 4 |
| 38.48 | 2.339 | 3 |
| 39.79 | 2.265 | 2 |
| 42.06 | 2.148 | 2 |
| 44.76 | 2.025 | 2 |
| 48.63 | 1.872 | 2 |
| 48.80 | 1.866 | 1 |

TABLE 6 (contd.)

| 2 Theta | D(A) | I/IMAX |
|---|---|---|
| 50.25 | 1.816 | 1 |
| 53.33 | 1.718 | 1 |
| 54.14 | 1.694 | 1 |
| 54.88 | 1.673 | 2 |
| 56.70 | 1.623 | 2 |
| 59.25 | 1.560 | 2 |
| 59.39 | 1.556 | 3 |

These X-ray data demonstrate that the dealuminized form of the zeolite still possesses the characteristic structure of zeolite ZSM-20: lines numbers 1, 2, 4, 6, 8, 15, 19, 20, 26, 30, 31 and 32 correspond to the significant lines of ZSM-20 as reported in Table 1 above and U.S. Patent 3,972,983. The X-ray data for the steam and acid dealuminized samples show, moreover, that no significant crystallinity loss has occurred on dealuminization since the high angle (2 theta greater than 20°) peaks are of the same intensity in the original spectra. The nearly identical hydrocarbon sorption values also indicate that no significant crystallinity loss has occurred during dealuminization.

**Claims**

1. A process for making an acid stabilized zeolite of the faujasite type, which comprises calcining a zeolite of the faujasite type in a steam-containing atmosphere at increasing temperatures extending over the temperature range at which the chemically bound water is liberated from the zeolite, characterized by a heating rate not greater than 1.5°C $min^{-1}$.

2. A process according to claim 1, in which the heating rate of not greater than 1.5°C $min^{-1}$ is maintained over the temperature range of 500 to 650°C.

3. A process according to claim 2, in which the heating rate within the range 500 to 650°C is not greater than 0.5°C $min^{-1}$.

4. A process according to claim 3, in which the heating rate within the range 500 to 650°C is not greater than 0.25°C $min^{-1}$.

5. A process according to any one of claims 1 to 4, in which the steam-containing atmosphere comprises 10 to 20 weight percent steam.

6. A process according to any one of claims 1 to 5, in which the steam-containing atmosphere comprises steam and nitrogen.

7. A process according to any one of claims 1 to 6, in which the acid stabilized zeolite is extracted with an acid to remove aluminum and raise the silica:alumina ratio of the zeolite.

8. A process according to any one of claims 1 to 7, in which the zeolite is zeolite Y.

9. A process according to any one of claims 1 to 7, in which the zeolite is zeolite ZSM-20.

10. A method of making zeolite Y having a silica:alumina ratio of at least 30:1, which comprises the steps of:

(i) calcining a sample of zeolite Y starting material having a silica:alumina ratio from 3:1 to 25:1 in accordance with the process of claims 1 and 2,
(ii) cooling the calcined zeolite, and
(iii) contacting the cooled, calcined zeolite with an acid to remove structural aluminum from the zeolite and so to raise the silica:alumina ratio of the zeolite to at least 30:1.

11. A method of making zeolite ZSM-20 having a silica:alumina ratio greater than 10:1 which comprises the steps of:

(i) calcining a sample of zeolite ZSM-20 starting material having a silica:alumina ratio from 7:1 to 10:1 in accordance with the process of claim 1,
(ii) cooling the calcined zeolite, and
(iii) contacting the cooled, calcined zeolite with an acid to remove structural aluminum from the zeolite and so to raise the silica:alumina ratio of the zeolite to greater than 10:1.

12. A method according to claim 11, in which the heating rate during calcination is maintained at not more than 1.5°C $min^{-1}$ over the temperature range 500 to 650°C.

13. A method according to any one of claims 10 to 12, in which the acid is hydrochloric acid.
14. Zeolite ZSM-20 having a structural silica:alumina ratio greater than 10:1.
15. Zeolite ZSM-20 according to claim 14, in which the structural silica:alumina ratio is at least 20:1.
16. Zeolite ZSM-20 according to claim 15, in which the structural silica:alumina ratio is at least 100:1.

**Patentansprüche**

1. Verfahren zur Herstellung eines säurestabilen Zeolith von Faujasit-Typ, wobei das Verfahren das Kalzinieren eines Zeoliths des Faujasit-Typs in einer Wasserdampf enthaltenden Atmosphäre bei erhöhten Temperaturen umfaßt, die sich über den Temperaturbereich hinaus erstrecken, bei dem das chemisch gebundene Wasser aus dem Zeolith freigesetzt wird, gekennzeichnet durch eine Erwärmeungsgeschwindigkeit von nicht größer als 1,5°C $\cdot$ min$^{-1}$.

2. Verfahren nach Anspruch 1, dadurch gekennzeichnet, daß die Erwärmungsgeschwindigkeit von nicht größer als 1,5°C $\cdot$ min$^{-1}$ über den Temperaturbereich von 500 bis 650°C beibehalten wird.

3. Verfahren nach Anspruch 2, dadurch gekennzeichnet, daß die Erwärmungsgeschwindigkeit innerhalb des Bereiches von 500 bis 650°C nicht größer als 0,5°C $\cdot$ min$^{-1}$ ist.

4. Verfahren nach Anspruch 3, dadurch gekennzeichnet, daß die Erwärmungsgeschwindigkeit innerhalb des Bereiches von 500 bis 650°C nicht größer als 0,25°C $\cdot$ min$^{-1}$ ist.

5. Verfahren nach einem der Ansprüche 1 bis 4, dadurch gekennzeichnet, daß die Wasserdampf enthaltende Atmosphäre 10 bis 20 Gew.-% Wasserdampf umfaßt.

6. Verfahren nach einem der Ansprüche 1 bis 5, dadurch gekennzeichnet, daß die Wasserdampf enthaltende Atmosphäre Wasserdampf und Stickstoff umfaßt.

7. Verfahren nach einem der Ansprüche 1 bis 6, dadurch gekennzeichnet, daß der säurestabilisierte Zeolith mit einer Säure extrahiert wird, um das Aluminium zu entfernen, und das Siliciumdioxid/Aluminiumoxid-Verhältnis des Zeolithen zu erhöhen.

8. Verfahren nach einem der Ansprüche 1 bis 7, dadurch gekennzeichnet, daß der Zeolith Zeolith Y ist.

9. Verfahren nach einem der Ansprüche 1 bis 7, dadurch gekennzeichnet, daß der Zeolith Zeolith ZSM-20 ist.

10. Verfahren zur Herstellung eines Zeolithen Y mit einem Siliciumdioxid/Aluminiumoxid-Verhältnis von mindestens 30:1 gekennzeichnet durch die Stufen:

(1) Kalzinieren einer Probe von Zeolith Y-Ausgangsmaterial mit einem Siliciumdioxid/Aluminiumoxid-Verhältnis von 3:1 bis 25:1 entsprechend dem Verfahren nach Anspruch 1 und 2,
(2) Kühlen des kalzinierten Zeolithen und
(3) Kontaktieren des gekühlten, kalzinierten Zeolithen mit einer Säure, um das strukturelle Aluminium aus dem Zeolith zu entfernen und so das Siliciumdioxid/Aluminiumoxid-Verhältnis des Zeolithen auf mindestens 30:1 zu erhöhen.

11. Verfahren zur Herstellung eines Zeolithen ZSM-20 mit einem Siliciumdioxid/Aluminiumoxid-Verhältnis von größer als 10:1, gekennzeichnet durch die Stufen:

(1) Kalzinieren einer Probe von Zeolith ZSM-20-Ausgangsmaterial mit einem Siliciumdioxid/Aluminiumoxid-Verhältnis von 7:1 bis 10:1 nach dem Verfahren von Anspruch 1,
(2) Kühlen des kalzinierten Zeolithen und
(3) Kontaktieren des gekühlten, kalzinierten Zeolithen mit einer Säure, um das strukturelle Aluminium aus dem Zeolith zu entfernen und so das Siliciumdioxid/Aluminiumoxid-Verhältnis des Zeolithen auf größer als 10:1 zu erhöhen.

12. Verfahren nach Anspruch 11, dadurch gekennzeichnet, daß die Erwärmungsgeschwindigkeit während der Kalzinierung bei nicht mehr als 1,5°C $\cdot$ min$^{-1}$ über den Temperaturbereich von 500 bis 650°C aufrechterhalten wird.

13. Verfahren nach einem der Ansprüche 10 bis 12, dadurch gekennzeichnet, daß die Säure Chlorwasserstoffsäure ist.

14. Zeolith ZSM-20 gekennzeichnet durch ein strukturelles Siliciumdioxid/Aluminiumoxid-Verhältnis von größer als 10:1.

15. Zeolith ZSM-20 nach Anspruch 14, dadurch gekennzeichnet, daß das strukturelle Siliciumdioxid/Aluminiumoxid-Verhältnis mindestens 20:1 beträgt.

16. Zeolith ZSM-20 nach Anspruch 15, dadurch gekennzeichnet, daß das strukturelle Siliciumdioxid/Aluminiumoxid-Verhältnis mindestens 100:1 beträgt.

**Revendications**

1. Procédé de préparation d'une zéolite résistante aux acides du type de la faujasite consistant à calciner une zéolite du type de la faujasite dans une atmosphère contenant de la vapeur à des températures

croissantes dépassant l'intervalle de températures auxquelles l'eau chimiquement liée est libérée de la zéolite, caractérisé par une vitesse de chauffage qui ne dépasse pas 1,5°C $min^{-1}$.

2. Procédé selon la revendication 1, dans lequel la vitesse de chauffage qui n'est pas supérieure à 1,5°C $min^{-1}$ est maintenue sur l'intervalle de températures de 500 à 650°C.

3. Procédé selon la revendication 2, dans lequel la vitesse de chauffage dans l'intervalle de 500 à 650°C n'est pas supérieure à 0,5°C $min^{-1}$.

4. Procédé selon la revendication 3, dans lequel la vitesse de chauffage dans l'intervalle de 500 à 650°C n'est pas supérieure à 0,25°C $min^{-1}$.

5. Procédé selon l'une quelconque des revendications 1 à 4, dans lequel l'atmosphère contenant de la vapeur comprend de 10 à 20% en poids de vapeur.

6. Procédé selon l'une quelconque des revendications 1 à 5, dans lequel l'atmosphère contenant de la vapeur comprend de la vapeur et de l'azote.

7. Procédé selon l'une quelconque des revendications 1 à 6, dans lequel la zéolite résistante aux acides est extraite avec un acide pour enlever l'aluminium et élever le rapport silice/alumine de la zéolite.

8. Procédé selon l'une quelconque des revendications 1 à 7, dans lequel la zéolite est une zéolite Y.

9. Procédé selon l'une quelconque des revendications 1 à 7, dans lequel la zéolite est une zéolite ZSM-20.

10. Procédé de préparation de zéolite Y dont le rapport silice/alumine est d'au moins 30/1, qui comprend les étapes de:

(i) calcination d'un échantillon de matière première à base de zéolite Y dont le rapport silice/alumine est compris entre 3/1 et 25/1 selon les revendications 1 et 2;
(ii) refroidissement de la zéolite calcinée; et
(iii) mise en contact de la zéolite calcinée refroidie avec un acide pour éliminer l'aluminium structurel de la zéolite et élever ainsi le rapport silice/alumine de la zéolite à une valeur d'au moins 30/1.

11. Procédé de préparation de zéolite ZSM-20 dont le rapport silice/alumine soit supérieur à 10/1, qui comprend les étapes de:

(i) calcination d'une matière première à base de ZSM-20 dont le rapport silice/alumine est compris entre 7/1 et 10/1 selon le procédé de la revendication 1;
(ii) refroidissement de la zéolite calcinée; et
(iii) mise en contact de la zéolite calcinée refroidie avec un acide pour éliminer l'aluminium structurel de la zéolite et élever ainsi le rapport silice/alumine de la zéolite à une valeur supérieure à 10/1.

12. Procédé selon la revendication 11, dans lequel on maintient la vitesse de chauffage pendant la calcination à une valeur qui ne dépasse pas 1,5°C $min^{-1}$ sur l'intervalle de températures de 500 à 650°C.

13. Procédé selon l'une quelconque des revendications 10 à 12, dans lequel l'acide est l'acide chlorhydrique.

14. Zéolite ZSM-20 dont le rapport structurel silice/alumine est supérieure à 10/1.

15. Zéolite ZSM-20 selon la revendication 14, dans laquelle le rapport structurel silice/alumine est d'au moins 20/1.

16. Zéolite ZSM-20 selon la revendication 15, dans laquelle le rapport structurel silice/alumine est d'au moins 100/1.